# EUROPEAN PATENT APPLICATION

(11) **EP 3 495 843 A1**
(43) Date of publication of application: **12.06.2019**
(21) Application number: 18211112.0
(22) Date of filing: 07.12.2018
(51) Int. Cl.: G01S 15/10, G01S 15/89, G01S 15/00

(54) **CHIRP SONAR IMAGING SYSTEM**

(30) Priority: 07.12.2017 GB 201720434
(71) Applicant: Thurn Group Limited, Norwich, Norfolk NR13 3DJ (GB)
(72) Inventor: HILLER, Thomas Matthew, Norwich, Norfolk NR13 3DJ (GB)
(74) Representative: ip21 Ltd

(57) **Abstract**

A Compressed High Intensity Radiated Pulse, CHIRP, sonar system comprises a first transmitter, a second transmitter, and at least one receiver, wherein the first transmitter is configured to transmit a first CHIRP signal in a first frequency band and the second transmitter is configured to transmit a second CHIRP signal in a second frequency band which is higher than the first frequency band; wherein the first transmitter is configured to send the first CHIRP signal simultaneously with the second CHIRP signal; and wherein the system further comprises a signal processor to correlate combined CHIRPS with different delays; whereby angles are resolved for improved mapping of a volume to be mapped.

## Description

### Technical Field

The present invention relates to sonar imaging systems and in particular to CHIRP sonars.

### Background

Imaging of the sea floor using sonar systems has been carried out for many years and sonar surveys have many applications. For example, surveys are used by anglers as well as in offshore engineering or inspection tasks. Sub-bottom profiling systems for example are used to identify and characterise layers of sediment or rock under the sea floor. Commercial shallow seismic sub-bottom profilers (SBPs) for engineering geophysics applications usually cost at least $30000.

Sonar systems usually make use of a ship-towed hydrophone or array of hydrophones to process underwater acoustic signals and determine the location of a noise source from the depth of the sea floor. Known sonar systems measure the length of time it takes for the sound to travel from the boat to the sea floor and back as an echo.

A traditional sonar usually transmits a powerful "ping", or pulse of energy into the water column at a specific frequency, then "listens" for the echoes to return. This information is then processed with appropriate software to create the image of the mapped sea floor or submerged structure. This type of "burst" energy pulse may be high in power, but it is usually very short in duration to limits the amount of energy that transmitted into the water column.

Sonars with single-frequency, dual-frequency or even triple-frequency transducers have been used for about 30 years. Compressed High Intensity Radiated Pulse technology, also known as CHIRP technology, has been developed in more recent years and is now well known. Instead of pinging a single frequency like traditional 2D sonars, CHIRPing devices transmit over a sweeping range of frequencies. With each pulse, the transducer starts vibrating at a low frequency, which is then modulated upward to a high frequency over the duration of the pulse.

A traditional sonar transmits about one percent of the time and CHIRP sonars transmit ascending pulses that are ten times as long in duration. CHIRP sonars put significantly more energy into the water column, 10 to 50 times more than traditional sonars.

Although CHIRP sonars have advantages over traditional sonars, the resolution they achieve is still limited. To increase resolution, the bandwidth of a CHIRP sonar can be increased which adds to the complexity and cost of such devices, and the maximum bandwidth that can be used with a single transmitter is limited by the electronic and mechanical resonances that can physically be achieved. There is still a need for a high resolution, light-weight, low-power and low-cost sonar, particularly one suitable for sub-bottom profiling in shallow seabed depths with resolution suitable for engineering works.

It is to these problems, amongst others, that aspects of the invention attempt to offer a solution.

### Summary

According to a first independent aspect, there is provided a Compressed High Intensity Radiated Pulse, CHIRP, sonar system comprising at least one first transmitter, and at least one second transmitter (and possibly more), and at least one receiver, wherein the first transmitter is configured to transmit a first CHIRP signal in a first frequency band and the second transmitter is configured to transmit a second CHIRP signal in a second frequency band which is higher than the first frequency band (and so on for the third, fourth etc transmitters if present, all at different frequency bands); wherein the first transmitter is configured to send the first CHIRP signal simultaneously with the second CHIRP signal; and wherein the system further comprises a signal processor to correlate combined CHIRPS with different delays; whereby angles are resolved for improved mapping of a volume to be mapped.

The transmitters may each be optimised to transmit in each different band. The CHIRP signals travel to the observed objects and are 'echoed', that is, scattered back from the objects, and the scattered sound waves are detected in the receiver(s). By using two or more different bandwidths simultaneously from different transmitters, the above defined sonar system achieves a 'multi-tonal' CHIRP. Rather than increasing the number of transmitters to increase power in the water and bandwidth, the CHIRP sonar according to this aspect of the invention, increases resolution and target definition by simultaneously using different bandwidths from separate transmitters, thereby improving resolution and transmit power.

In a dependent aspect, the receiver has one receiver or a plurality of receiver channels and is configured to receive a receive CHIRP signal corresponding to the combined first and second CHIRP signals. The received signal will be a combination of the two (or more) transmitted signals. The received combination of the two transmitted signals will be a sum of the two transmitted signals. The sum may have a delay in one of the transmitted signals. The delay is due to the signal path for an object being longer for one of the transmitters than that for the other. An example delay may be 1ms for example.

In a dependent aspect, the first transmitter is configured to send the first CHIRP signal simultaneously with the second CHIRP signal. By simultaneous transmission we mean that the CHIRP signals are transmitted over the same period of time.

In a dependent aspect, CHIRP sonar system further comprises a signal processor configured to simulate first and second modelled CHIRP signals in the first and second frequency bands respectively, wherein the second modelled CHIRP signal has a time delay in at least one channel, combine the first and second modelled CHIRP signals to construct a third modelled CHIRP signal and correlate the receive CHIRP signal with the third modelled CHIRP signal.

CHIRP signal correlation is a technique well-known in the art. Correlation is also called 'match filtering' or 'pulse compression'. The correlation process involves taking two files. One file is the received signal. The other file is the CHIRP that was transmitted. The transmitted CHIRP is lined up with the start of the received signal. Each sample of the transmitted CHIRP is multiplied by the corresponding sample in the received signal, and all the results are summed to give one number R1 for delay T1. Then the transmitted CHIRP is moved one sample later in time and the process repeated to give R2 at delay T2. This is repeated for every time step to the end of the receive signal. A third file is created from each of these Rn, Tn pairs. This third file is the correlation result. The correlation can be done as described here or in the frequency domain. This is a commonly known and widely applied technique.

Using known digital pattern matching and signal processing, usually referred to as "pulse compression", CHIRP devices can receive and process information from each pulse. The CHIRP signals may be processed using known pulse compression processes, for example as used in known radar and sonar systems, which can convert a long duration frequency-coded pulse into a narrow pulse of highly increased amplitude. A narrow pulse with high peak power can be correlated from a long duration pulse with low peak power, increasing the range resolution and improving the signal to noise ratio, giving the device greater ability to resolve targets from the background noise.

Preferably, first and second frequency bands are respectively within the 1 to 15 kHz band. This enables applications for shallow seismic sub-bottom profiling.

In a second independent aspect, there is provided an imaging method comprising the steps of:
transmitting a first CHIRP signal in a first frequency band;
transmitting a second CHIRP signal in a second frequency band which is higher than the first frequency band;
sending the first CHIRP signal simultaneously with the second CHIRP signal; and
correlating combined CHIRPS with different delays; whereby angles are resolved for mapping a volume.

The first and second CHIRP signals are transmitted simultaneously.

Preferably, the combined CHIRP signals echoed back from an imaged volume are received by at least one receiver.

### Brief Description of the Drawings

Specific embodiments of the invention are now described by way of example and with reference to the accompanying drawings wherein:
Figure 1 shows a CHIRP transmitter and receiver arrangement with two transmitters and one receiver;
Figure 2 is an example plot of frequency versus time, for the two transmitters, Tx1, Tx2;
Figures 3 is a plot of the dB difference between the peak of the delayed and no-delay CHIRPs vs the delay constructed;
Figure 4 shows a physical configuration of a CHIRP transmitter and receiver arrangement with two transmitters and one receiver;
Figure 5 shows an example transmit signal;
Figure 6 shows an example when an object is on the centreline;
Figure 7 shows what the receive signal looks like for an object in the centreline;
Figure 8(a) to (c) show an example of signal correlation;
Figure 9 shows an example when the object is away from the centreline;
Figure 10 shows what the receive signal looks like for an object away from the centreline;
Figure 11 is a comparison of the signals for objects on the centreline and away from the centreline; and
Figures 12(a) and 12(b) show examples of angle discrimination.

### Detailed Description

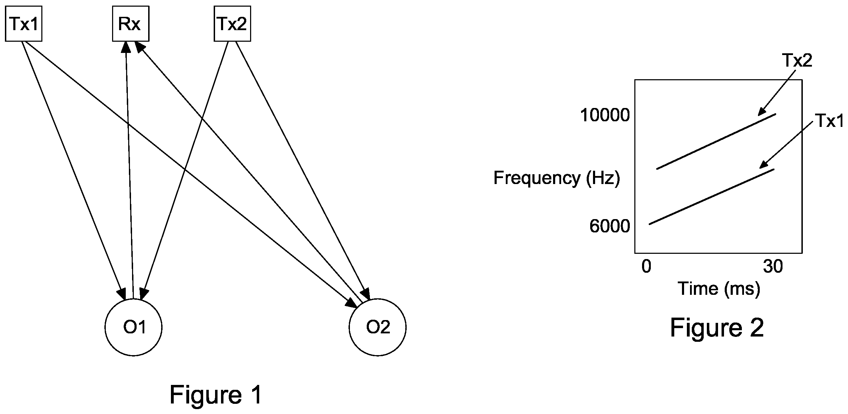

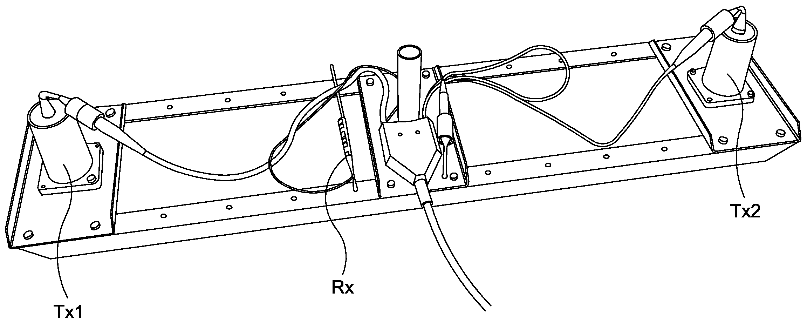

With reference to Figure 1, a CHIRP sonar has two transmitters, Tx1, Tx2 separated horizontally, as well as a receiver Rx. Figure 4 shows a physical configuration of the CHIRP transmitter and receiver arrangement with two transmitters and one receiver. Two or more transmitters may simultaneously transmit CHIRP signals (or 'CHIRPS') and one or more receivers may be included in the arrangement.

A CHIRP is a signal in which the frequency increases ('up-chirp') or decreases ('down-chirp') with time.

In this example, there are two objects in the field of view, O1 and 02. The transmitters Tx1, Tx2 send signals which reach the two objects.

The different transmitters may output different signals containing different frequencies. In the case of two transmitters as shown in Figure 1, the first transmitter Tx1 sends out a frequency modulated CHIRP that changes from 6kHz to 8kHz, and the second transmitter operates in a higher frequency band, sending out CHIRP signals from 8kHz to 10kHz. A plot of frequency versus time for the two transmitters is shown in Figure 2, with the lower curve representing Tx1, and the higher curve representing Tx2. In this example, the duration of each transmitted signal is 30ms and the signals are transmitted simultaneously.

The objects O1, O2 shown in Figure 1 that are in the field of view scatter back the signal from both transmitters Tx1, Tx2. This means that the sound coming back to the receiver Rx is the sum of the signals from both transmitters Tx1, Tx2. Object O1 is equidistant from both transmitters Tx1, Tx2 (i.e. on the centreline) therefore the received signal is a 'zero-delay' combined signal. Object 02 is off to one side of the centreline therefore the combined sound coming back to the transmitters will have a delay in one of the channels.

Specifically, the signal paths in the example of Figure 1 are as follows:
- For O1: Tx1-O1-Rx and Tx2-O1-Rx
- For O2: Tx1-O2-Rx and Tx2-O2-Rx

The length of the signal paths for O1 is the same. For 02, the path Tx1-O2 is longer than Tx2-O2. Therefore, there is a delay in the received signal from the first transmitter Tx1, compared to that received from the second transmitter Tx2. The signals (CHIRPS) reflected from the objects O1, O2 are combined when detected by the receiver Rx. The combined CHIRPS with a delay in one of the channels is called a 'delayed CHIRP'. The data processing for one transmission is to correlate the returned signal with combined CHIRPS, each of which have a different delay in one channel. Correlating combined CHIRPS with different delays corresponds to looking for the returns from different angles from the centreline. Whilst CHIRP signal correlation is a well known-technique in the art, an embodiment of the invention employs correlation to effectively use the delay information encoded in the received signals to resolve angles of the mapped volume.

For example, using a 30ms CHIRP signal with a Tx1 frequency band of 6kHz to 8kHz, and a Tx2 frequency band of 8kHz to 10kHz, this delay and its effect on the received signal can be modelled.

Several modelled received CHIRPs were generated:
1: A 30ms multi-tonal CHIRP was generated with 6-8kHz and 8-10kHz bands and zero delay; and
2. Several 30ms multi-tonal delayed CHIRPs were generated with 6-8kHz and 8-10kHz bands and with delays up to 5ms in one of the channels, at 0.1ms intervals.

These received CHIRPS are then correlated with the no-delay CHIRP. In this example, the maximum of the no-delay correlation results is normalised to 0dB, and the maximum amplitude of the correlated return from the delayed CHIRP is found.

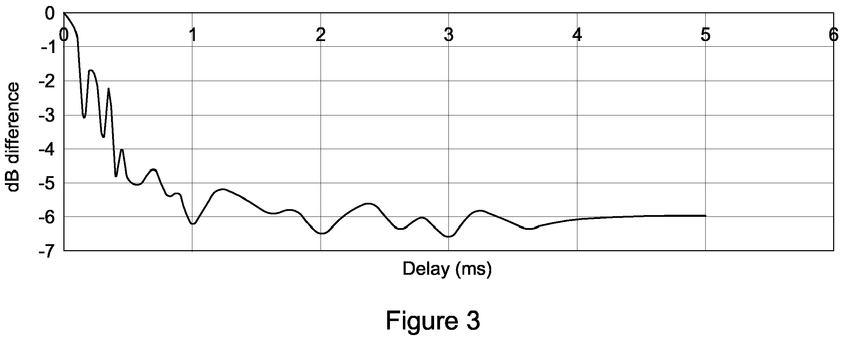

Figure 3 shows a plot of the dB difference between the peak of the delayed and no-delay CHIRPS vs the delay used. This shows the discrimination between delays in the specific bands used in a 2 transmitter configuration. Different delays correspond to different angles, so Figure 3 corresponds to the discrimination of different angles. The correspondence of delay to angle depends on the separation of the transmitters, the range to the object, and the speed of sound in water. Using a wider bandwidth as well as using more transmitters can further increase the discrimination.

Figure 3 shows how correlating with the 'wrong' delay gives a lower signal than correlating with the 'right' delay: effectively this shows the amount of rejection of the wrong angle (about 6dB in this example). Importantly, this rejection can get better when using more transmitters (all operating in different frequency bands).

As explained above, a simultaneous CHIRP transmit (from Tx1, Tx2) will result in a delayed CHIRP received if the object (02) in the field of view is not on the centreline. Accordingly, the waveforms used in the correlation of the received signal have delays.

Sonar systems according to embodiments of the invention operate preferably at frequencies between 1 to 15 kHz. Such sonar systems are preferably used as shallow seismic sub-bottom profilers (SBPs) for engineering geophysics applications.

Further examples are now described with reference to the remaining Figures.

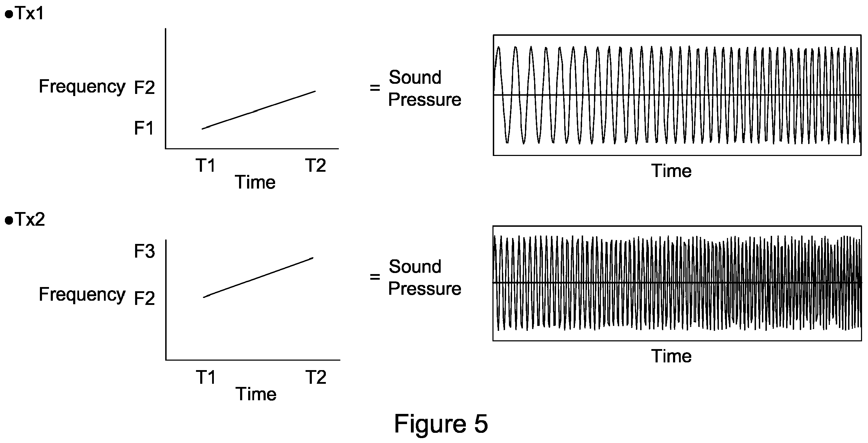

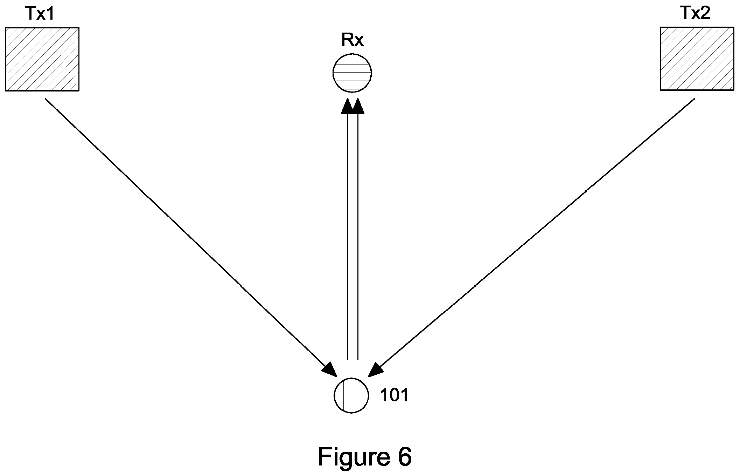

Figure 5 shows an example transmit signal, with two CHIRP signals from transmitters Tx1, Tx2 being simultaneously transmitted into water. Figure 6 shows an example when the object is on the centreline. The received sound from objects in the sonar field of view is a sum of the signals from the two transmitters (Tx1, Tx2). Reference 101 is an object that scatters sound.

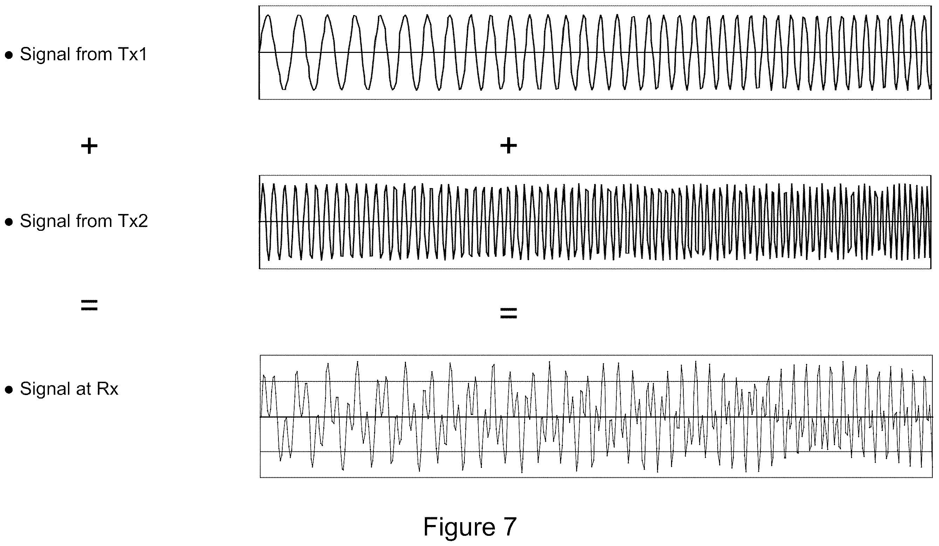

Figure 7 shows what the receive signal looks like for an object in the centreline. The received sound from objects in the centreline is the sum of the sound pressure in the transmitted CHIRPS.

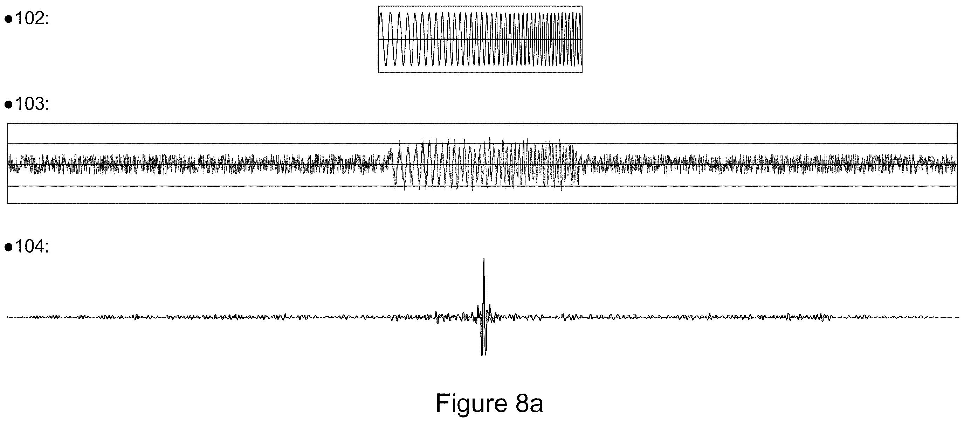

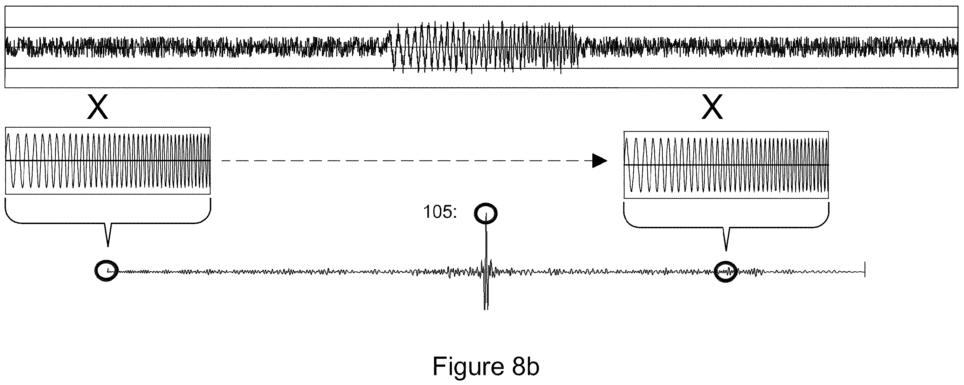

Figures 8(a) and 8(b) show an example of signal correlation. A CHIRP transmitted signal 102 (here a CHIRP) is shown in Figure 8(a), although it will be appreciated signals do not have to be CHIRP for the purpose of signal correlation. Reference 103 indicates a received signal which contains the transmitted signal (plus noise). Reference 104 shows the result of correlation (='match filtering' or 'pulse compression'). Notice how the location of the transmitted CHIRP has been found in the noisy signal.

With regard to figure 8 (b):
- Take the received signal and line up the CHIRP at the beginning;
- Multiply each point along it by the corresponding point in the CHIRP. The sum of all these gives the very first point of the correlation result;
- Now move it by one sample and repeat, do this along the whole received signal. Two examples are shown below. The best match gives the biggest peak.

Reference 105 corresponds to the best match.

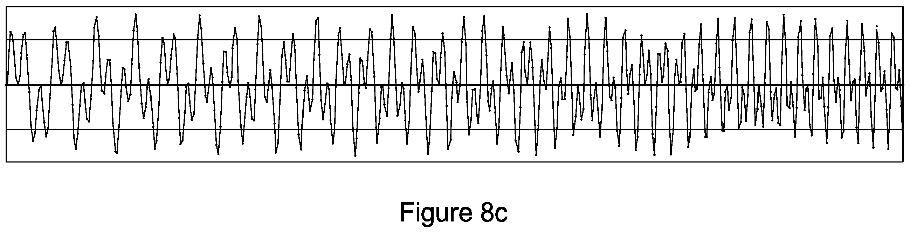

With reference to Figure 8(c), on the centreline, one can correlate to the combined CHIRP, which looks as shown in Figure 8(c).

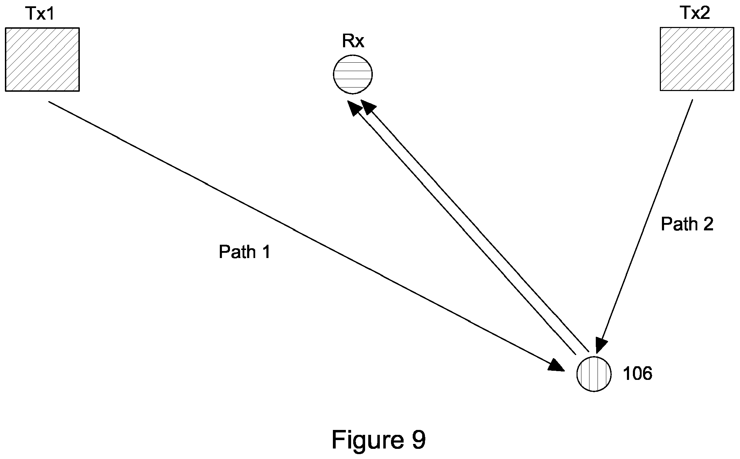

Figure 9 shows an example when the object is away from the centreline. The received signal when the object is away from the centreline will have a delay in one of the CHIRPS because Path 1 is longer than Path 2. Reference 106 corresponds to an object that scatters sound.

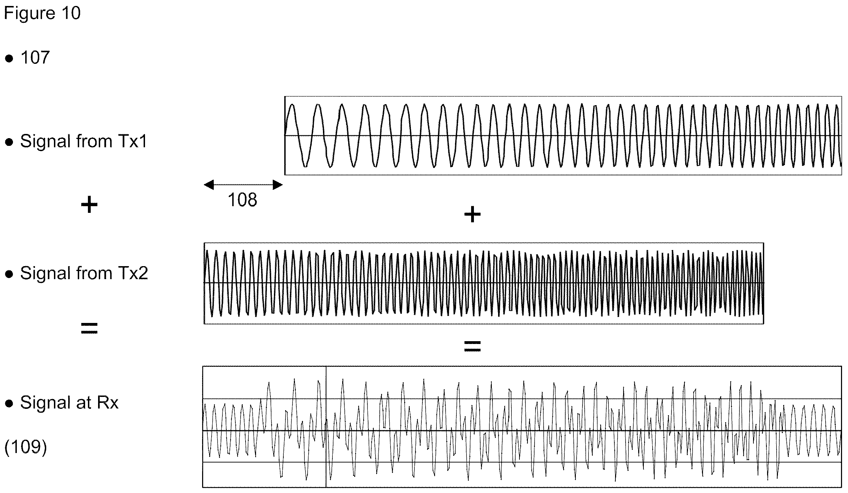

Figure 10 shows what the receive signal looks like for an object away from the centreline. The received sound from objects away from the centreline has a delay in one of the CHIRPS because Path 1 is longer than Path 2. Reference 107 indicates that the received sound from object away from the centre line is the sum of the sound pressure in the transmitted CHIRPS, with a delay. Reference 108 indicates a delay due to a path difference. Reference 109 indicates that the actual shape depends on specific delay.

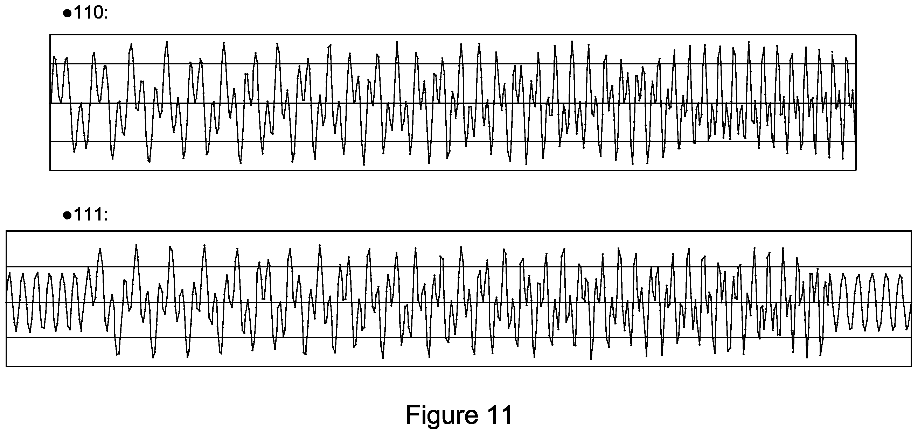

Figure 11 is a comparison of the signals for objects on the centreline as shown by reference 110 and away from the centreline as shown by reference 111 where the actual shape depends on the delay. The signals are very different and the question is how different.

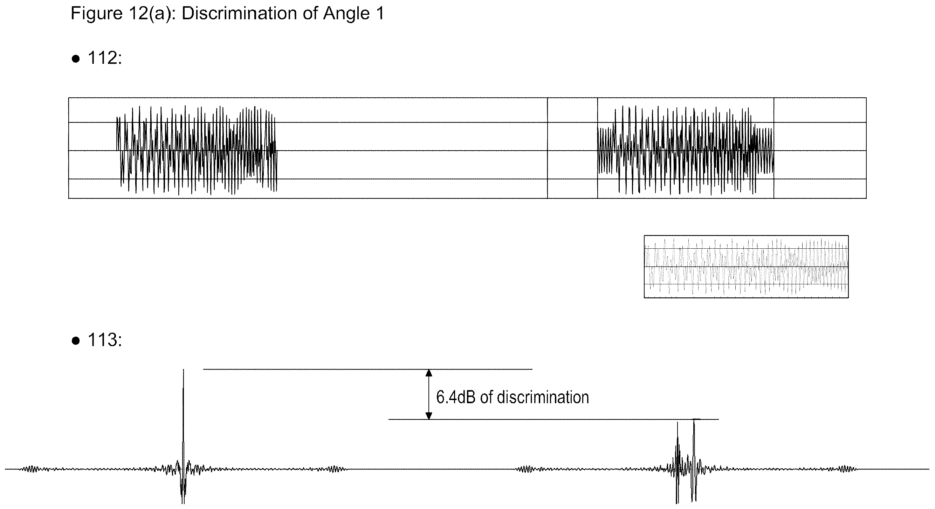

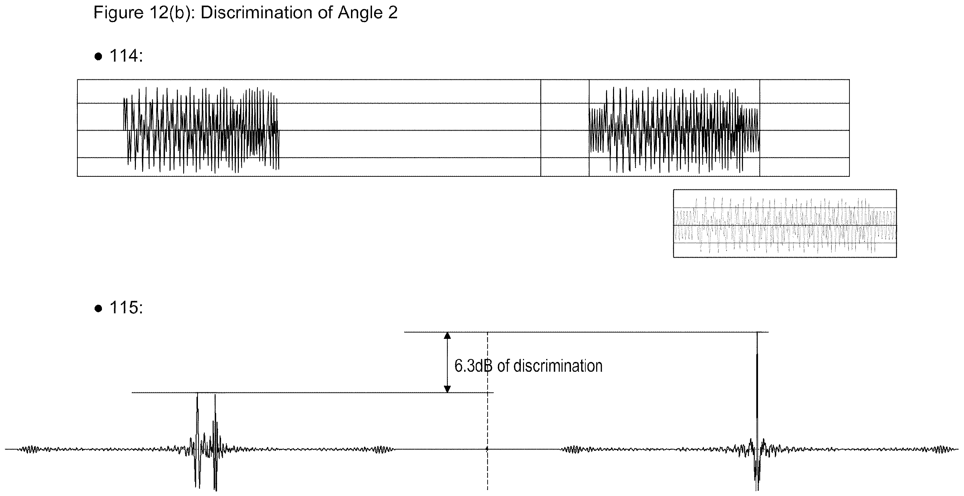

Figures 12(a) and 12(b) show examples of angle discrimination. As a result, angle can be discriminated with >6dB discrimination (with two receivers). This can be done for many angles by using different delays when processing the signal. Same applies to returns from many objects or a volume. One receiver is sufficient, although more can be used. The discrimination requires at least two transmitters and simultaneous signals transmitted at different frequency bands.

In figure 12 (a), reference 112 indicates a receive signal from two objects, one at the centreline (left return) and one off the centreline (right). Reference 113 indicates that this can be correlated with the no-delay CHIRP.

In figure 12 (b), reference 114 indicates again the signal from two objects, one at the centreline (left return) and from one off the centreline (right). Reference 115 indicates that this can also be correlated with the delayed CHIRP.

## Claims

1. A Compressed High Intensity Radiated Pulse, CHIRP, sonar system comprising a first transmitter, a second transmitter, and at least one receiver, wherein the first transmitter is configured to transmit a first CHIRP signal in a first frequency band and the second transmitter is configured to transmit a second CHIRP signal in a second frequency band which is higher than the first frequency band; wherein the first transmitter is configured to send the first CHIRP signal simultaneously with the second CHIRP signal; and wherein the system further comprises a signal processor to correlate combined CHIRPS with different delays; whereby angles are resolved for mapping a volume.

2. A CHIRP sonar system according to claim 1, wherein the receiver has one or more receiver channels and is configured to receive a receive CHIRP signal corresponding to the combined first and second CHIRP signals.

3. A CHIRP sonar system according to either claim 1 or claim 2, wherein said signal processor is configured to simulate first and second modelled CHIRP signals in the first and second frequency bands respectively, wherein the second modelled CHIRP signal has a time delay in at least one channel, combine the first and second modelled CHIRP signals to construct a third modelled CHIRP signal and correlate the receive CHIRP signal with the third modelled CHIRP signal.

4. A CHIRP sonar system according to any one of the preceding claims, wherein the first and second frequency bands are respectively within the 1 to 15 kHz band.

5. A CHIRP sonar system according to any one of the preceding claims, wherein the system comprises three or more transmit channels configured to transmit simultaneous CHIRP signals in 3 or more frequency bands.

6. An imaging method comprising the steps of:
transmitting a first CHIRP signal in a first frequency band;
transmitting a second CHIRP signal in a second frequency band which is higher than the first frequency band;
sending the first CHIRP signal simultaneously with the second CHIRP signal; and correlating combined CHIRPS with different delays; whereby angles are resolved for mapping a volume.
